# EUROPÄISCHE PATENTANMELDUNG

(11) **EP 3 739 412 A1**
(43) Veröffentlichungstag der Anmeldung: **18.11.2020**
(21) Anmeldenummer: 20174357.2
(22) Anmeldetag: 13.05.2020
(51) Int. Cl.: G05B 23/02, G01M 13/045, G05B 19/4065

(54) **VERFAHREN ZUR ÜBERWACHUNG EINES SPINDELLAGERS**

(30) Priorität: 16.05.2019 DE 102019112877
(71) Anmelder: HOMAG GmbH, 72296 Schopfloch (DE)
(72) Erfinder: Sekinger, Philipp, 78733 Aichhalden (DE); Hönig, Martin, 77855 Achern (DE); Weiss, Ruven, 72275 Alpirsbach (DE); Albrecht, Ludwig, 72280 Dornstetten-Aach (DE)
(74) Vertreter: Hoffmann Eitle

(57) **Zusammenfassung**

Die Erfindung betrifft ein Verfahren zur Überwachung eines Spindellagers, insbesondere eines Frässpindellagers. Beispielsweise kommt ein solches Spindellager in einer Bearbeitungsmaschine im Bereich der holzverarbeitenden Industrie zum Einsatz. Das Verfahren umfasst die Schritte: Detektieren von Parametern einer Bearbeitungsmaschine, wobei die Bearbeitungsmaschine eine mittels des Spindellagers gelagerte Spindel aufweist, Übertragen der Parameter an eine Speichereinrichtung, und Ermitteln eines Zustands eines Schmierstoffs des Spindellagers basierend auf den an die Speichereinrichtung übertragenen Parametern.

## Beschreibung

### Technisches Gebiet

Die Erfindung betrifft ein Verfahren zur Überwachung eines Spindellagers, insbesondere eines Frässpindellagers. Beispielsweise kommt ein solches Spindellager in einer Bearbeitungsmaschine im Bereich der holzverarbeitenden Industrie zum Einsatz.

### Stand der Technik

Es ist bekannt, dass eine wesentliche Ausfallursache von Frässpindelaggregaten, ausgenommen singulärer Ereignisse wie eines Unfalls auf Grund einer fehlerhaften Programmierung, der Verschleiß eines Lagers eines solchen Frässpindelaggregats ist.

Bei Frässpindelaggregaten im metallverarbeitenden Bereich liegen bei verhältnismäßig großen Prozesskräften eher geringe Drehzahlen vor. Dies hat zur Folge, dass bei solchen Frässpindelaggregaten hauptsächlich Stahl-Kugellager zum Einsatz kommen, die relativ hohe Kräfte aufnehmen können. Die Hauptausfallursache bei diesen Frässpindelaggregaten ist meist bedingt durch Pitting (Grübchenbildung als Folge von Ermüdungsrissbildung) in den Lagerlaufbahnen. Mit fortschreitender Pitting-Bildung erhöhen sich die Laufgeräusche der Lager. Mit jedem Überrollen einer Defektstelle entstehen Stöße im Lager, welche recht leicht mittels Beschleunigungsaufnehmern detektiert werden können. Somit enthalten die Lagergeräusche Informationen über den Zustand der Lagerlaufbahn.

Die Erfahrungen aus der Vergangenheit haben allerdings gezeigt, dass die Hauptausfallursache bei Frässpindelaggregaten im Bereich der holzverarbeitenden Industrie nicht auf Pitting-Bildung, sondern auf Mangelschmierung zurückzuführen ist.

Im Holzbereich werden deutlich höhere Drehzahlen als im Metallbereich benötigt. Gleichzeitig sind die Prozesskräfte eher gering. Deshalb werden bei Frässpindelaggregaten für Holzbearbeitungsmaschinen beispielsweise Hybrid-Kugellager (Stahl-Kugellager mit Keramikkugeln) eingesetzt, die sich besser für hohe Drehzahlen eignen.

Auf Grund der höheren Drehzahlen ist allerdings die Eigenerwärmung der Lager deutlich größer. Gleichzeitig altert der Schmierstoff bei höheren Temperaturen deutlich schneller. Dies führt dazu, dass die Gebrauchsdauer des Schmierstoffs, auch Fettgebrauchsdauer genannt, endet, noch bevor es zur Pitting-Bildung kommt. Eine signifikante Erhöhung der Laufgeräusche findet in diesem Zeitbereich somit üblicherweise nicht statt und kann als Indikator für einen potentiellen Ausfall nicht oder gegebenenfalls nur ergänzend herangezogen werden.

Neigt sich die Fettgebrauchsdauer des Schmierstoffs ihrem Ende, kommt es zur Mangelschmierung an der Lagerstelle. Dies führt zu einem sehr starken Temperaturanstieg und kann innerhalb von wenigen Minuten zum Totalausfall des Lagers führen.

Die DE 10 2011 017 808 A1 beschreibt eine Werkzeugmaschine sowie ein Verfahren zum Steuern einer Werkzeugmaschine. Die Steuereinheit der Werkzeugmaschine kann eine Speichereinrichtung enthalten, die eingerichtet ist, die Datensignale des Maschinentyps, der Sensoreinrichtung, die von der Datenverarbeitungseinrichtung verarbeiteten Daten, die von der Hauptsteuerung an die Steuereinheit ausgegebenen Daten und/oder die von der Überwachungseinheit festgelegten Zustände zu speichern. Das kontinuierliche Erfassen der Verschleißparameter ermöglicht eine Vorhersage über die Restlebensdauer einer Bearbeitungsspindel. Darüber hinaus kann der Anwender zur nachträglichen Analyse die Betriebszustände im Kurz- und im Langzeitspeicherbereich direkt in der Maschinensteuerung abrufen.

Da der durch Verschleiß bedingte Ausfall bei Frässpindelaggregaten im Bereich der holzverarbeitenden Industrie nicht durch Materialermüdung und Pitting-Bildung, sondern hauptsächlich durch Mangelschmierung als Folge von gealtertem bzw. überhitztem Schmierstoff, entsteht, ist es erforderlich, neue Ansätze zu erarbeiten.

### Gegenstand der Erfindung

Ziel der Erfindung ist es, ein Spindellager dahingegen zu überwachen, dass ein durch Verschleiß bedingter Ausfall des Spindellagers vermieden wird.

Der Gegenstand des Anspruchs 1 stellt ein Verfahren bereit. Weitere bevorzugte Ausführungsformen sind in den abhängigen Ansprüchen aufgeführt. Ferner betrifft die Erfindung ein System, das zur Überwachung eines Spindellagers eingerichtet ist.

Mit Hilfe des erfindungsgemäßen Verfahrens und Systems ist es möglich, einen möglichen Ausfall, insbesondere einen Lagerdefekt als Folge von Verschleiß, einer Spindellagerung vorausschauend zu bewerten, bevorzugt basierend auf den Daten und den Erfahrungswerten einer Vielzahl von vergleichbaren Spindeln. Dabei liegt der Erfindung unter anderem die Erkenntnis zu Grunde, dass die sogenannte Fettgebrauchsdauer (Dauer bis zum Verbrauch oder Gebrauchsende des Schmierstoffs) zu ermitteln ist. In Folge einer Mangelschmierung würde ein Spindellager verstärkt und gegebenenfalls in kürzester Zeit verschleißen.

Somit ist eine vorbeugende Wartung möglich oder besser kalkulierbar. Die Wartung der Bearbeitungsmaschine oder der Service-Einsatz zum Tausch der Spindellagerung oder der Spindel können frühzeitig geplant werden, und Monteure können rechtzeitig angefragt und Ersatzteile entsprechend bestellt werden. Dadurch können unerwartete Ausfallzeiten vermieden und die Wartung der Maschine gezielt geplant werden.

Ferner können Reparaturkosten generell reduziert werden. Bei Spindellagerungen, die rechtzeitig ausgetauscht werden, ist meist eine "Werksüberholung" der Spindel möglich. Wird eine Spindel jedoch so lange betrieben, bis die Lager festgehen, werden meist auch die Lagersitze (und somit das Spindelgehäuse) beschädigt. Dies hat deutlich höhere Reparaturkosten zur Folge.

Mittels des erfindungsgemäßen Verfahrens wird zumindest ein Spindellager überwacht. Dabei ist es bevorzugt, dass es sich hierbei um das am stärksten belastete Spindellager handelt. Gemäß einer weiteren Zielrichtung kann es jedoch auch vorgesehen sein, mehrere Spindellager einer Bearbeitungsmaschine zu überwachen.

Es ist bevorzugt, dass die Parameter ausgewählt sind aus: Drehzahl der Spindel, Lagerlast, Vibrationen (Körperschall), Kühlmittel- oder Wicklungstemperatur, Motorströme, Motorleistungen. Auf Grundlage der Parameter kann ein Berechnungsmodell zum Ermitteln des Zustands des Schmierstoffs erstellt und/oder geändert werden.

In einer Ausführungsform ist es vorgesehen, dass Parameter einer Vielzahl von Bearbeitungsmaschinen detektiert und an die Speichereinrichtung übertragen wird. Auf diese Weise kann die Datenbasis weiter vergrößert werden.

Es ist bevorzugt, dass die Speichereinrichtung eine zentrale Speichereinrichtung, insbesondere ein Cloud-Speicher, ist. Dies ermöglicht einen weltweiten Zugriff auf die Speichereinrichtung, so dass die Flexibilität des Einsatzes des Verfahrens weiter gesteigert wird.

In einer weiteren Ausführungsform ist es vorgesehen, dass das Ermitteln eines Zustands eines Schmierstoffs anhand eines in der Speichereinrichtung gespeicherten Berechnungsmodells durchgeführt wird, wobei bevorzugt ist, dass das in der Speichereinrichtung gespeicherte Berechnungsmodell durch die übertragenen Parameter (und/oder Modellparameter) geändert werden kann. Somit wird die Genauigkeit bezüglich der zu erwartenden Restlebensdauer des Schmierstoffs weiter verbessert.

Das in der Speichereinrichtung gespeicherte Berechnungsmodell kann mittels einer Berechnungseinheit geändert werden, welche Berechnungseinheit künstliche Intelligenz einsetzt. Auf diese Weise kann das Berechnungsmodell kontinuierlich anhand der bereitgestellten Parameter verbessert werden.

Es ist bevorzugt, dass zum Ermitteln eines Zustands eines Schmierstoffs eine Lagertemperatur ermittelt wird. Die Lagertemperatur kann für das Berechnungsmodell zum Ermitteln eines Zustands eines Schmierstoffs verwendet werden.

Insbesondere wird die Lagertemperatur rechnerisch bestimmt. Dabei ist es bevorzugt, dass hierfür ein Modell der Lagertemperatur (nachfolgend auch "Lagertemperaturmodell") verwendet wird. Auf diese Weise kann ein Faktor zur Ermittlung der sogenannten Fettgebrauchsdauer (Zustand des Schmierstoffs) indirekt ermittelt werden, wodurch die Ermittlung der Lagertemperatur ohne zusätzlichen Sensor ermöglicht wird. Somit eignet sich dieses Vorgehen auch für eine Nachrüstlösung an einer Maschine, die nicht mit einem Temperatursensor zur Ermittlung der Lagertemperatur ausgestattet ist oder ausgestattet werden kann.

Mit Hilfe an der Bearbeitungsmaschine vorhandener Sensorik, insbesondere zur Ermittlung der Drehzahl, der Lagerlast und von Vibrationen, und dem Lagertemperaturmodell sollen die Einflussfaktoren während der Betriebszeit der Spindel erfasst und in der Speichereinrichtung abgespeichert werden.

Somit kann, wie bereits erläutert, die Lagertemperatur indirekt ermittelt, insbesondere mittels des Lagertemperaturmodells aus den folgenden Einflussgrößen errechnet werden: Drehzahl, Lagerlast, Vibrationen, Kühlmittel- bzw. Wicklungstemperatur, Motorströme, Leistungen, sowie ggf. eine Temperatur eines anderen Spindelbauteils.

Auf diese Weise erhält jede Spindel einen Datensatz, der das individuelle historische Last-Kollektiv der Spindel widerspiegelt. Diese Informationen werden für das Berechnungsmodell zum Ermitteln eines Zustands eines Schmierstoffs verwendet.

Durch die Speicherung der Daten in einem Cloud-Speicher ist es gemäß einer weiteren Ausführungsform möglich das Berechnungsmodell für die Fettgebrauchsdauer kontinuierlich zu verfeinern, sodass die Zuverlässigkeit des Modells immer weiter erhöht werden kann. Dies wird insbesondere dadurch erzielt, dass Daten von mehreren Spindeln aus unterschiedlichen Maschinen geeignet kombiniert werden.

Dadurch stehen für das Modell mehr Trainingsdaten zur Verfügung, wodurch die Generalisierbarkeit des Modells verbessert wird. Darüber hinaus kann das Modell selbstlernend ausgeführt werden. Dadurch wird erreicht, dass die Genauigkeit des Modells mit Hilfe neuer Daten fortlaufend optimiert wird.

Zusätzlich kann die Informationsdichte der in der Cloud gespeicherten Daten durch eine Vorverarbeitung auf einem Maschinenrechner erhöht werden. Hierdurch kann die Genauigkeit des Modells noch weiter verbessert werden, da aussagekräftigere Merkmale für das Lernen zur Verfügung stehen. Durch die erhöhte Informationsdichte dieser Merkmale und die niedrigere Dimensionalität der Daten kann die Komplexität des Modells reduziert werden. Dadurch erhöht sich die Dateneffizienz des Modells (es werden weniger Trainingsdaten benötigt). Ebenso wird die notwendige Bandbreite der Kommunikationsverbindung verringert.

Bevorzugt ist das Spindellager ein Stahl-Kugellager mit Keramikkugel, welches für hohe Drehzahlen, und somit für den Einsatz im Bereich der holzverarbeitenden Industrie, geeignet ist. Auch kann es sich um ein Spindellager handeln, bei dem im Betrieb die auf das Spindellager wirkenden Kräfte eher gering sind und die Fettgebrauchsdauer endet, bevor die Materialermüdung in der Laufbahn des Spindellagers einsetzt.

Die detektierten Parameter können vor der Übermittelung an die Speichereinheit in einer Berechnungseinheit der Bearbeitungsmaschine aufbereitet werden. Beispielsweise werden die Parameter komprimiert oder es werden Mittelwerte berechnet, die zur Speichereinheit übertragen werden.

Es ist bevorzugt, dass der ermittelte Zustand an die Bearbeitungsmaschine gemeldet wird. An der Bearbeitungsmaschine können dem Bediener dann entsprechende Informationen angezeigt werden.

Der ermittelte Zustand kann mit einem ersten Schwellwert abgeglichen werden, wobei bei Überschreiten des ersten Schwellwerts ein Warnsignal ausgegeben wird. Auf diese Weise kann der Nutzer direkt auf einen bestimmten Zustand aufmerksam gemacht werden, so dass bei Bedarf entsprechende Gegenmaßnahmen eingeleitet werden können.

Wenn ein zweiter Schwellwert überschritten wird, kann es ferner vorgesehen sein, die Bearbeitungsmaschine mit reduzierter Drehzahl und/oder reduziertem Vorschub arbeitet, oder die Bearbeitungsmaschine zu stoppen, um eine kostenintensive Schädigung der Bearbeitungsmaschine zu verhindern.

Obwohl die Überwachung des Spindellagers primär mit Blick auf ein mögliches Gebrauchsende des Schmierstoffs gerichtet ist, können zusätzlich Vibrationen des Spindellagers detektiert werden, um eine Pitting-Bildung am Lager zu überwachen. Dabei kann es vorgesehen sein, bei Überschreiten eines ersten Schwellwerts ein Warnsignal zu erzeugen und den Nutzer somit auf diesen Umstand hinzuweisen.

Gemäß eines weiteren Aspekts wird ein Computerprogramm bereitgestellt, das Steuerbefehle umfasst, die bei Ausführung des Programms auf einem Computer diesen veranlassen, das Verfahren gemäß einem der vorangegangenen Aspekte auszuführen.

Ferner betrifft die Offenbarung ein computerlesbares Speichermedium mit einem Programm, mit dem Parametern einer Bearbeitungsmaschine empfangen werden können, wobei basierend auf den an die Speichereinrichtung übertragenen Parametern (und/oder Modellparameter) der Zustand eines Schmierstoffs des Spindellagers ermittelt werden kann. Das Programm kann ferner zur Durchführung einer der weiteren bevorzugten Aspekte des Verfahrens eingerichtet sein.

Ferner betrifft die Erfindung ein System zur Überwachung eines Spindellagers. Das System oder Komponenten hiervon können eingerichtet sein, ein Verfahren gemäß einem der zuvor genannten Aspekte durchzuführen. Das System umfasst: Sensoren zum Detektieren von Parametern einer Bearbeitungsmaschine, die eine mittels des Spindellagers gelagerte Spindel aufweist, eine Übertragungseinrichtung zum Übertragen der Parameter an eine Speichereinrichtung, und eine Berechnungseinheit zum Ermitteln eines Zustands eines Schmierstoffs des Spindellagers basierend auf den an die Speichereinrichtung übertragenen Parametern (und/oder Modellparameter).

Insbesondere umfasst das System als Speichereinrichtung eine zentrale Speichereinrichtung, insbesondere ein Cloud-Speicher, ist. Dies ermöglicht einen weltweiten Zugriff auf die Speichereinrichtung, so dass die Flexibilität des Einsatzes des Verfahrens weiter gesteigert wird.

Das System kann eine Vielzahl von Bearbeitungsmaschinen umfassen, die jeweils Sensoren zum Detektieren von Parametern der jeweiligen Bearbeitungsmaschine aufweisen.

### Kurze Beschreibung der Zeichnungen

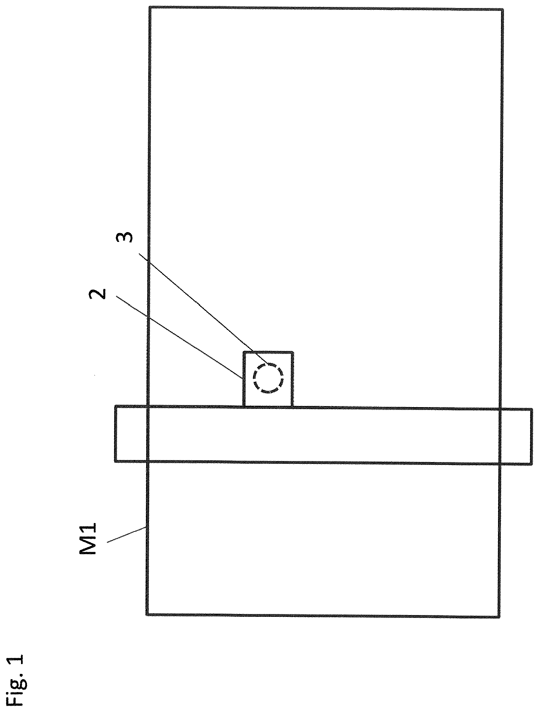

- Fig. 1: zeigt eine schematische Ansicht einer Bearbeitungsmaschine.
- Fig. 2: zeigt eine schematische Ansicht zur Erläuterung des erfindungsgemäßen Verfahrens.

### Detaillierte Beschreibung der bevorzugten Ausführungsformen

Anhand der beigefügten Figuren wird eine bevorzugte Ausführungsform der Erfindung beschrieben. Obwohl die Ausführungsform nicht beschränkend, sondern rein beispielhaft, zu verstehen ist, können Einzelmerkmale der Ausführungsform auch zur Spezifizierung der Erfindung herangezogen werden.

Im Rahmen der Ausführungsform wird als ein Beispiel eines Bearbeitungsaggregats ein Frässpindelaggregat 2 einer Bearbeitungsmaschine M1 dargestellt, wobei die hier beschriebene Bearbeitungsmaschine M1 im Bereich der holzverarbeitenden Industrie eingesetzt wird. Anstelle eines Frässpindelaggregats 2 kann es sich beim Bearbeitungsaggregat der Bearbeitungsmaschine M1 auch um ein Bohrspindelaggregat handeln.

Das Frässpindelaggregat 2 ist entlang eines bewegbaren Portals 4 verfahrbar, wobei gemäß einer alternativen Ausführungsform anstelle eines Portals auch ein Ausleger vorgesehen sein kann. Ferner ist das Frässpindelaggregat 2 zumindest in einer vertikalen Richtung bewegbar.

Das Frässpindelaggregat 2 umfasst ein Gehäuse sowie eine Spindel 3, die ein Bearbeitungswerkzeug drehend antreibt. Die Spindel 3 ist mittels Hybridlagern gelagert, die als Stahl-Kugellager mit Keramikkugeln (beispielsweise aus Siliziumnitrid) ausgebildet sind. Derartige Lager sind für hohe Drehzahlen bei eher geringerer Last ausgelegt.

Die Lager des Frässpindelaggregats 2 werden mit einem Schmierstoff (nachfolgend auch als "Fett" bezeichnet) geschmiert. Im Rahmen von Versuchen hat sich rausgestellt, dass der Zustand des Schmierstoffs ein wesentlicher Faktor dafür ist, ob die Lager ohne hohen Verschleiß betrieben werden können.

Es ist bekannt, die sogenannte Fettgebrauchsdauer (Dauer bis zum Verbrauch oder Gebrauchsende des Schmierstoffs) rechnerisch zu ermitteln, wobei hierfür als Parameter die Drehzahl der Spindel, die Lagertemperatur, die Lagerlast und Vibrationen (Körperschall) zur Berechnung herangezogen werden. Diese Informationen werden für ein Berechnungsmodell zum Ermitteln eines Zustands eines Schmierstoffs verwendet.

Die Bearbeitungsmaschine M1 bzw. das Frässpindelaggregat 2 sind deshalb mit Sensoren ausgestattet, um die Drehzahl der Spindel, die Lagerlast sowie die Vibrationen zu ermitteln.

Die Lagertemperatur wird, da eine direkte Messung kaum oder schwer möglich ist, indirekt ermittelt, insbesondere basierend auf einer Berechnung unter Einbeziehung der Drehzahl, der Lagerlast, Vibrationen, Kühlmittel- oder Ermittlungstemperatur, Motorströme sowie Leistungen. In die Berechnung kann auch eine Temperatur eines anderen Spindelbauteils einbezogen werden. Die genannten Parameter werden beim Betrieb des Frässpindelaggregats 2 kontinuierlich ermittelt und zu einem Datensatz zusammengefasst.

Basierend auf diesen Eingangswerten wird ein Lagertemperaturmodell erstellt und/oder verfeinert. Die basierend auf dem Lagertemperaturmodell erhaltene Lagertemperatur wird für das bereits beschriebene Berechnungsmodell zum Ermitteln eines Zustands eines Schmierstoffs verwendet.

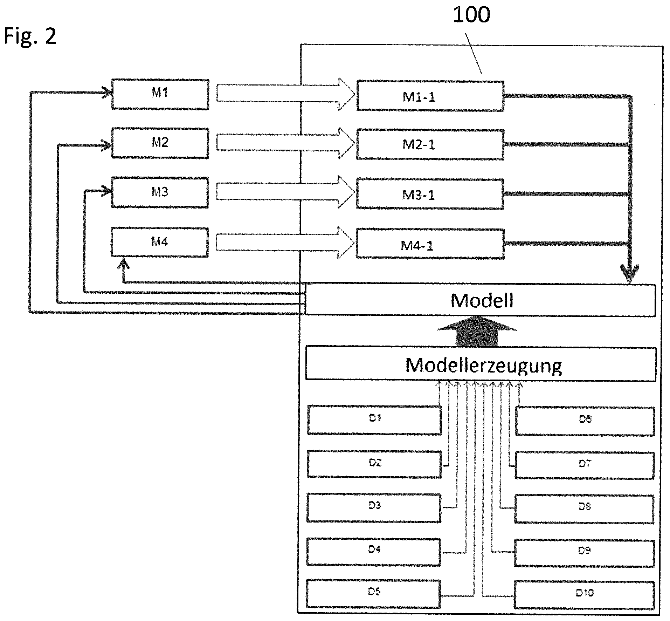

In Fig. 2 wird eine schematische Übersicht eines Systems dargestellt, das zur Ermittlung der Fettgebrauchsdauer eingesetzt wird.

Zur Ermittlung der Fettgebrauchsdauer werden, wie voranstehend beschrieben, Datensätze zu jeder Bearbeitungsmaschine ermittelt (im vorliegenden Ausführungsbeispiel sind vier Bearbeitungsmaschinen M1-M4 dargestellt). Jeder der ermittelten Datensätze spiegelt gewissermaßen ein individuelles, historisches Last-Kollektiv des entsprechenden Frässpindelaggregats einer Bearbeitungsmaschine M1-M4 wieder.

Die Datensätze M1-1 bis M4-1 der Bearbeitungsmaschinen M1-M4 werden an eine zentrale Speichereinrichtung (Cloud-Speicher) 100 übertragen, und in der zentralen Speichereinrichtung für ein Berechnungsmodell herangezogen. Das Berechnungsmodell selbst wird vorab anhand einer Vielzahl von Daten D1-D10 verschiedener Frässpindeln erstellt.

Auf diese Weise ist es möglich, das Berechnungsmodell für die Fettgebrauchsdauer kontinuierlich zu verfeinern, sodass die Zuverlässigkeit des Modells weiter gesteigert werden kann.

In diesem Zusammenhang ist es möglich, dass das Berechnungsmodell zum Ermitteln eines Zustands eines Schmierstoffs, bevorzugt auch das Lagertemperaturmodell, in der zentralen Speichereinrichtung 100 anhand eines selbstlernenden Algorithmus ausgeführt werden kann, um die Qualität des Modells weiter zu steigern. Auf diese Weise wird erreicht, dass die Genauigkeit des jeweiligen Modells mithilfe neuer Daten fortlaufend verbessert wird.

Zusätzlich kann die Informationsdichte der in der zentralen Speichereinrichtung 100 gespeicherten Daten durch eine Vorverarbeitung auf einem Maschinenrechner vergrößert werden. Hierdurch kann die Genauigkeit des Modells noch weiter verbessert werden, da aussagekräftigere Merkmale für das Lernen zur Verfügung stehen. Durch die erhöhte Informationsdichte dieser Merkmale und die geringe Dimensionalität der Daten kann die Komplexität des Modells reduziert werden. Dadurch erhöht sich die Dateneffizienz des Modells. Ferner wird die für die Datenübertragung erforderliche Bandbreite der Kommunikationsverbindung verringert.

Die jeweils anhand des Berechnungsmodells ermittelte Fettgebrauchsdauer wird an die jeweilige Bearbeitungsmaschine M1-M4 zurückgemeldet. Ein Zeitpunkt einer Wartung kann an einem Bildschirm der jeweiligen Bearbeitungsmaschine angezeigt werden, beispielsweise bei der Inbetriebnahme der Bearbeitungsmaschine, so dass ein Nutzer einen Austausch eines Schmierstoffs der Lagerung im Rahmen einer Wartung einplanen kann. Ferner kann die Bearbeitungsmaschine über einen optischen und/oder akustischen Warnmechanismus verfügen, der dem Bediener mitteilt, dass eine Wartung zeitnah vorgenommen werden muss. Wird der prognostizierte Wartungszeitpunkt erreicht, kann eine Inbetriebnahme der Bearbeitungsmaschine unterbunden oder ein laufender Betrieb der Bearbeitungsmaschine gestoppt werden, um eine Beschädigung der Spindellagerung zu vermeiden.

Zusätzlich zur Überwachung der Fettgebrauchsdauer ist es möglich, zusätzlich eine Ermittlung und Überwachung der Lagergeräusche der Spindellagerung vorzunehmen. Auf diese Weise kann ferner ein Szenario abgedeckt werden, bei dem auf Grund hoher Prozesskräfte oder bedingt durch einen Programmierfehler des Verfahrwegs des Frässpindelaggregats eine Deformation der Lagerlaufbahn oder ein Pitting auftritt. Somit kann die Prozesssicherheit weiter gesteigert werden.

Gemäß einer weiteren Ausführungsform ist es vorgesehen, dass die Fettgebrauchsdauer durch eine oder mehrere Messungen des Schmierstoffs selbst ermittelt oder ergänzt ermittelt wird. Hierbei kann der Alterungsgrad des Schmierstoffs mittels Impedanzspektroskopie ermittelt werden.

Darüber hinaus kann es vorgesehen sein, einzelne Kennwerte direkt im Schmierstoff zu überwachen, beispielsweise die elektrische Leitfähigkeit kann verwendet werden, um einen Verunreinigungsgrad des Schmierstoffs durch Abrieb oder Ähnliches zu detektieren. Auch kann am Frässpindelaggregat eine Sensorik zur Überwachung der Ausgasung des Schmierstoffs angebracht werden.

## Patentansprüche

1. Verfahren zur Überwachung zumindest eines Spindellagers, umfassend die Schritte:
Detektieren von Parametern einer Bearbeitungsmaschine (M1-M4), wobei die Bearbeitungsmaschine (M1-M4) eine mittels des Spindellagers gelagerte Spindel (3) aufweist,
Übertragen der Parameter an eine Speichereinrichtung (100),
Ermitteln eines Zustands eines Schmierstoffs des Spindellagers basierend auf den an die Speichereinrichtung übertragenen Parametern.

2. Verfahren gemäß Anspruch 1, **dadurch gekennzeichnet, dass** die Parameter ausgewählt sind aus: Drehzahl der Spindel (3), Lagerlast, Vibrationen, Kühlmittel- oder Wicklungstemperatur, Motorströme, Motorleistungen.

3. Verfahren gemäß einem der vorangegangenen Ansprüche, **dadurch gekennzeichnet, dass** Parameter einer Vielzahl von Bearbeitungsmaschinen (M1-M4) detektiert und an die Speichereinrichtung (100) übertragen wird.

4. Verfahren gemäß einem der vorangegangenen Ansprüche, **dadurch gekennzeichnet, dass** die Speichereinrichtung eine zentrale Speichereinrichtung, insbesondere ein Cloud-Speicher, ist.

5. Verfahren gemäß einem der vorangegangenen Ansprüche, **dadurch gekennzeichnet, dass** das Ermitteln eines Zustands eines Schmierstoffs anhand eines in der Speichereinrichtung gespeicherten Berechnungsmodells durchgeführt wird, wobei bevorzugt ist, dass das in der Speichereinrichtung gespeicherte Berechnungsmodell durch die übertragenen Parameter geändert werden kann.

6. Verfahren gemäß Anspruch 5, **dadurch gekennzeichnet, dass** ein Ändern des Berechnungsmodels mittels künstlicher Intelligenz durchgeführt wird.

7. Verfahren gemäß einem der vorangegangenen Ansprüche, **dadurch gekennzeichnet, dass** zum Ermitteln eines Zustands eines Schmierstoffs eine Lagertemperatur ermittelt wird.

8. Verfahren gemäß Anspruch 7, **dadurch gekennzeichnet, dass** die Lagertemperatur mittels eines Lagertemperaturmodells ermittelt wird.

9. Verfahren gemäß einem der vorangegangenen Ansprüche, **dadurch gekennzeichnet, dass** das Spindellager ein Stahl-Kugellager mit Keramikkugeln ist.

10. Verfahren gemäß einem der vorangegangenen Ansprüche, **dadurch gekennzeichnet, dass** die detektierten Parameter vor der Übermittelung an die Speichereinheit (100) in einer Berechnungseinheit der Bearbeitungsmaschine aufbereitet werden.

11. Verfahren gemäß einem der vorangegangenen Ansprüche, **dadurch gekennzeichnet, dass** der ermittelte Zustand an die Bearbeitungsmaschine (M1) gemeldet wird.

12. Verfahren gemäß einem der vorangegangenen Ansprüche, **dadurch gekennzeichnet, dass** der ermittelte Zustand mit einem ersten Schwellwert abgeglichen wird, wobei bei Überschreiten des ersten Schwellwerts ein Warnsignal ausgegeben wird.

13. Verfahren gemäß Anspruch 12, **dadurch gekennzeichnet, dass** die Bearbeitungsmaschine bei Überschreiten eines zweiten Schwellwerts mit reduzierter Drehzahl und/oder reduziertem Vorschub arbeitet, oder die Bearbeitungsmaschine gestoppt wird.

14. Verfahren gemäß einem der vorangegangenen Ansprüche, **dadurch gekennzeichnet, dass** Vibrationen des Spindellagers detektiert werden, wobei bei Überschreiten eines Vibrations-Schwellwerts ein Warnsignal generiert wird.

15. Computerlesbares Speichermedium mit einem Programm, mit dem Parametern einer zumindest ein Spindellager umfassenden Bearbeitungsmaschine empfangen werden können, wobei basierend auf den an die Speichereinrichtung übertragenen Parametern der Zustand eines Schmierstoffs des Spindellagers ermittelt wird.

16. System zur Überwachung eines Spindellagers, umfassend:
Sensoren zum Detektieren von Parametern einer Bearbeitungsmaschine (M1-M4), die eine mittels des Spindellagers gelagerte Spindel (3) aufweist,
eine Übertragungseinrichtung zum Übertragen der Parameter an eine Speichereinrichtung (100),
eine Berechnungseinheit zum Ermitteln eines Zustands eines Schmierstoffs des Spindellagers basierend auf den an die Speichereinrichtung übertragenen Parametern.

17. System gemäß Anspruch 16, wobei die Speichereinrichtung (100) eine zentrale Speichereinrichtung, insbesondere ein Cloud-Speicher, ist.

18. System gemäß Anspruch 16 oder 17, wobei das System eine Vielzahl von Bearbeitungsmaschinen (M1-M4) umfasst, die jeweils Sensoren zum Detektieren von Parametern der jeweiligen Bearbeitungsmaschine (M1-M4) aufweisen.
